# EUROPEAN PATENT APPLICATION

(11) **EP 4 518 547 A1**
(43) Date of publication of application: **05.03.2025**
(21) Application number: 23795218.9
(22) Date of filing: 21.04.2023
(51) Int. Cl.: H04W 74/00

(54) **TERMINAL OPERATION METHOD AND APPARATUS, TERMINAL, AND NETWORK-SIDE DEVICE**

(30) Priority: 27.04.2022 CN 202210468420
(71) Applicant: Vivo Mobile Communication Co., Ltd., Dongguan, Guangdong 523863 (CN)
(72) Inventor: CHEN, Xiaohang, Dongguan, Guangdong 523863 (CN); WU, Kai, Dongguan, Guangdong 523863 (CN)
(74) Representative: Cabinet Beaumont
(86) International application number: PCT/CN2023/089778
(87) International publication number: WO 2023/207785

(57) **Abstract**

This application pertains to the field of communication technologies, and discloses a terminal operation method and apparatus, a terminal, and a network-side device. The terminal operation method in embodiments of this application includes: receiving, by a terminal, at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource; and performing, by the terminal, a first operation based on the at least one RACH configuration, where the first operation includes at least one of the following: determining validity of the target resource; and determining whether to transmit a random access message on the target resource.

## Description

### CROSS-REFERENCE TO RELATED APPLICATIONS

This application claims priority to Chinese Patent Application No. 202210468420.7, filed in China on April 27, 2022, which is incorporated herein by reference in its entirety.

### TECHNICAL FIELD

This application pertains to the field of communication technologies, and specifically relates to a terminal operation method and apparatus, a terminal, and a network-side device.

### BACKGROUND

A terminal transmits a random access channel (Random Access Channel, RACH) by using a RACH resource. In the related art, when a terminal transmits a RACH by using a preconfigured RACH resource, a case that the preconfigured RACH resource collides with a transmission resource of the terminal may occur. For example, the configured RACH resource collides with a downlink (Downlink, DL) resource, resulting in RACH transmission failure. Therefore, a probability of RACH transmission failure is high when the terminal performs RACH transmission by using the preconfigured RACH resource.

### SUMMARY

Embodiments of this application provide a terminal operation method and apparatus, a terminal, and a network-side device to resolve a problem that a probability of RACH transmission failure is high when a terminal performs RACH transmission by using a preconfigured RACH resource.

According to a first aspect, a terminal operation method is provided and includes:
receiving, by a terminal, at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource; and
performing, by the terminal, a first operation based on the at least one RACH configuration, where the first operation includes at least one of the following:
   determining validity of the target resource; and
   determining whether to transmit a random access message on the target resource.

According to a second aspect, a terminal operation method is provided and includes:
transmitting, by a network-side device, at least one random access channel RACH configuration to a terminal, where
each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where
the first operation includes at least one of the following:
   determining validity of the target resource; and
   determining whether to transmit a random access message on the target resource.

According to a third aspect, a terminal operation apparatus is provided and includes:
a receiving module, configured to receive at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource; and
an execution module, configured to perform a first operation based on the at least one RACH configuration, where the first operation includes at least one of the following:
   determining validity of the target resource; and
   determining whether to transmit a random access message on the target resource.

According to a fourth aspect, a terminal operation apparatus is provided and includes:
a transmitting module, configured to transmit at least one random access channel RACH configuration to a terminal, where
each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where
the first operation includes at least one of the following:
   determining validity of the target resource; and
   determining whether to transmit a random access message on the target resource.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The communication interface is configured to receive at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource. The processor is configured to perform a first operation based on the at least one RACH configuration, where the first operation includes at least one of the following: determining validity of the target resource; and determining whether to transmit a random access message on the target resource.

According to a seventh aspect, a network-side device is provided. The network-side device includes a processor and a memory. The memory stores a program or instructions capable of running on the processor. When the program or instructions are executed by the processor, the steps of the method according to the second aspect are implemented.

According to an eighth aspect, a network-side device is provided and includes a processor and a communication interface. The processor is configured to transmit at least one random access channel RACH configuration to a terminal, where each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where the first operation includes at least one of the following: determining validity of the target resource; and determining whether to transmit a random access message on the target resource.

According to a ninth aspect, a terminal operation system is provided and includes a terminal and a network-side device. The terminal may be configured to perform the steps of the terminal operation method according to the first aspect. The network-side device may be configured to perform the steps of the terminal operation method according to the second aspect.

According to a tenth aspect, a readable storage medium is provided. The readable storage medium stores a program or instructions. When the program or instructions are executed by a processor, the steps of the method according to the first aspect are implemented, or the steps of the method according to the second aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the second aspect.

According to a twelfth aspect, a computer program or program product is provided. The computer program or program product is stored in a storage medium. The computer program or program product is executed by at least one processor to implement the steps of the terminal operation method according to the first aspect; or the computer program or program product is executed by at least one processor to implement the steps of the terminal operation method according to the second aspect.

In the embodiments of this application, the terminal receives the at least one random access channel RACH configuration transmitted by the network-side device, where each of the at least one RACH configuration includes the at least one target resource, and the target resource includes at least one of the physical random access channel transmission occasion RO resource and the physical uplink shared channel occasion PO resource; and the terminal performs the first operation based on the at least one RACH configuration, where the first operation includes at least one of the following: determining validity of the target resource; and determining whether to transmit the random access message on the target resource. In this way, the terminal performs the first operation based on the at least one RACH configuration configured by the network-side device, so that a probability of RACH transmission failure can be reduced.

### BRIEF DESCRIPTION OF DRAWINGS

FIG. 1 is a block diagram of a wireless communication system to which an embodiment of this application may be applied;
FIG. 2 is a first flowchart of a terminal operation method according to an embodiment of this application;
FIG. 3 is a first schematic diagram of a RACH configuration according to an embodiment of this application;
FIG. 4 is a second schematic diagram of a RACH configuration according to an embodiment of this application;
FIG. 5 is a second flowchart of a terminal operation method according to an embodiment of this application;
FIG. 6 is a first schematic structural diagram of a terminal operation apparatus according to an embodiment of this application;
FIG. 7 is a second schematic structural diagram of a terminal operation apparatus according to an embodiment of this application;
FIG. 8 is a structural diagram of a communication device according to an embodiment of this application;
FIG. 9 is a schematic structural diagram of a terminal according to an embodiment of this application; and
FIG. 10 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

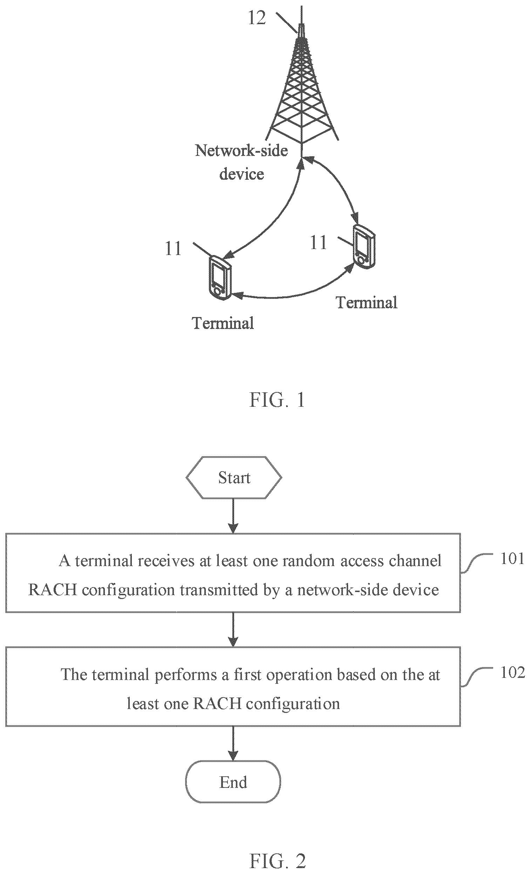

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

First, the following technical points are described to facilitate better understanding of the embodiments of this application.

In Rel-18, a flexible/full duplex (flexible/full duplex) operation on a network side and a half-duplex operation on a user/terminal side are as follows:
For a symmetric spectrum of frequency division multiplexing (Frequency Division Duplex, FDD):
An uplink or downlink spectrum of FDD may be semi-statically configured or dynamically indicated as downlink or uplink transmission on some slots/symbols.

For an asymmetric spectrum of time division multiplexing (Time Division Duplex, TDD):
Different frequency domain resources on some slots/symbols of TDD may be semi-statically configured or dynamically indicated as both uplink transmission and downlink reception.

A half-duplex terminal can perform only uplink transmission or downlink reception at the same time, that is, the terminal cannot receive and transmit signals at the same time.

### Slot (Slot) format (format):

To implement flexible network deployment, a transmission direction of each symbol in a slot is configured in an NR system by using a slot format.

There are three definitions of a transmission direction of a slot in NR: downlink (Downlink, DL), uplink (Uplink, UL), and flexible (flexible). When a DL or UL slot or symbol is configured in a network, a transmission direction at that time is clear. When a flexible slot or symbol is configured in the network, a transmission direction at that time is pending. The network may change the transmission direction of the flexible slot or symbol by using dynamic signaling, such as a dynamic (dynamic) slot format indicator (slot format indicator, SFI).

A slot may include downlink (downlink), uplink (uplink), and flexible (flexible) orthogonal frequency division multiplexing (Orthogonal frequency division multiplexing, OFDM) symbols. A flexible symbol may be modified to a downlink or uplink symbol.

The SFI may indicate a format of one or more slots. The SFI is transmitted on a group common physical downlink control channel (Group Common Physical Downlink Control Channel, GC-PDCCH).

The SFI may flexibly change a format of a slot based on a requirement to meet a service transmission requirement.

A terminal, such as user equipment (User Equipment, UE), determines, based on an indication of the SFI, whether to monitor a physical downlink control channel (Physical Downlink Control Channel, PDCCH).

### Slot configuration:

A base station may semi-statically configure one or more cell-specific (cell-specific) slot formats for the UE by using a higher-layer parameter UL-DL common configuration (UL-DL-configuration-common) and UL-DL common configuration set 2 (UL-DL-configuration-common-Set2) (optional).

The base station may also semi-statically configure one or more UE-specific (UE-specific) slot formats by using a higher-layer parameter UL-DL dedicated configuration (UL-DL-configuration-dedicated).

The base station may change the flexible symbol (symbol) or slot in the semi-static configuration by using an SFI carried in a GC-PDCCH message.

In addition, UE-specific RRC configurations implicitly indicating transmission directions are collectively referred to as measurement (measurement), including:
periodic or semi-persistent channel state information (Channel State Information, CSI)-reference signal (Reference Signal, RS) measurement configured by using UE-specific radio resource control (Radio Resource Control, RRC) signaling, periodic CSI reporting, and uplink and downlink transmission directions implicitly indicated by a periodic or semi-persistent sounding reference signal (Sounding Reference Signal, SRS); and
a physical random access channel (Physical Random Access Channel, PRACH) resource configured by using UE-specific RRC signaling, and grant-free uplink transmission of type (type) 1 and type 2, where
for grant-free uplink transmission of type 2, only transmission on a first activated resource is considered as UE-specific data (UE-specific data).

In addition, UE-specific (UE-specific) transmission includes A/N feedback of a physical uplink shared channel (Physical Uplink Shared Channel, PUSCH) and a physical downlink shared channel (Physical downlink shared channel, PDSCH), aperiodic measurement triggered by downlink control information (Downlink Control Information, DCI), and the like.

### Random access process:

The random access process includes:
a contention-based random access process (4-step (step) or 2-step RACH); and
a contention-free-based random access process.

"Contention-based 4-step random access process": The UE transmits message (Message, Msg) 1 to the network side. After receiving Msg1, the network side transmits Msg2 (random access response (Random Access Response, RAR) message) to the UE. If the UE does not receive a RAR that matches a preamble (preamble) index value in Msg1 after a RAR window (window) expires, the UE adds 1 to PREAMBLE_TRANSMISSION_COUNTER. The UE transmits Msg3 after receiving the RAR. After receiving Msg3, the network side transmits Msg4 (such as a contention resolution identifier) to the UE. The UE receives Msg4 and determines whether contention resolution is successful. If the contention resolution is successful, the random access process succeeds; otherwise, the UE adds 1 to PREAMBLE_TRANSMISSION_COUNTER, and reinitiates the random access process.

"Contention-based 2-step random access process": The UE transmits MsgA to the network side. After receiving MsgA, the network side transmits MsgB to the UE. If the UE does not receive MsgB within a period of time, the UE adds 1 to a counter that counts the number of times of transmitting MsgA and retransmits MsgA.

"Contention-free-based random access process": The UE transmits Msg1 to the network side. After receiving Msg1, the network side transmits Msg2 (RAR) to the UE, where the message carries uplink grant (uplink grant) information and identification information of the UE (for example, a random access preamble (preamble) index in Msg1). If the random access preamble index is the same as the random access preamble index in Msg1 transmitted by the UE, the UE considers that the random access process succeeds; otherwise, the UE adds 1 to PREAMBLE_TRANSMISSION_COUNTER, and reinitiates the random access process.

### Selection of a random access resource:

In NR, the base station may configure a plurality of frequency division multiplexing (Frequency division multiplexing, FDM) physical random access channel transmission occasions (PRACH transmission occasions) at a time domain position for transmitting a PRACH, where the PRACH transmission occasion is also referred to as a PRACH occasion and may be referred to as a RO herein for simplicity. The number of ROs in which FDM can be performed in a time instance (time instance) may be: {1, 2, 4, 8}.

A random access preamble can be transmitted only on a time domain resource configured by a parameter PRACHConfigurationIndex, and the random access preamble can be transmitted only on a frequency domain resource configured by a parameter prach-FDM, where the PRACH frequency domain resource *n*_{RA} ∈{0,1,...,*M* -1} , and M is equal to a higher-layer parameter prach-FDM. During initial access, PRACH frequency domain resources *n*_{RA} are numbered in ascending order from a RO resource with a lowest frequency in an initial active uplink bandwidth part (initial active uplink bandwidth part); otherwise, PRACH frequency domain resources *n*_{RA} are numbered in ascending order from a RO resource with a lowest frequency in an active uplink bandwidth part (active uplink bandwidth part).

In NR, there is an association relationship between a RO and an actually transmitted synchronization signal block (Synchronization Signal and PBCH block, SSB), where the SSB is a synchronization signal and physical broadcast channel block. One RO may be associated with a plurality of SSBs, or a plurality of SSBs may be associated with one RO. Generally, different SSBs may be transmitted by using different beams, and PRACH transmission is repeated on a RO associated with an SSB. The terminal may also transmit the PRACH by using a beam that matches the SSB.

For example, the number of ROs of FDM in a time instance is 8, and the number of actually transmitted SSBs is 4. For example, corresponding SSBs are SSB #0, SSB #1, SSB #2, and SSB #3, where each SSB is associated with two ROs. If the UE transmits the PRACH on a RO corresponding to SSB #0, the UE selects one RO from RO #0 and RO #1 to transmit the PRACH.

For example, the number of ROs of FDM in a time instance is 2, and the number of actually transmitted SSBs is 8. For example, corresponding SSBs are SSB #0, SSB #1, ..., SSB #7, where every two SSBs are associated with one RO. When a plurality of SSBs share one RO, preamble sets associated with the plurality of SSBs are different.

Before the UE transmits the PRACH, the UE first selects a resource. First, the UE selects a RO corresponding to an SSB whose RSRP is higher than a threshold. If a plurality of SSBs are higher than the threshold, the terminal may select any SSB. After the SSB is determined, if the SSB is associated with a plurality of ROs, the terminal may select one of the ROs for transmitting the PRACH. In a RO, a preamble is randomly selected from a preamble set associated with the SSB to transmit the PRACH.

A terminal operation method and apparatus, a terminal, and a network-side device provided in embodiments of this application are hereinafter described in detail by using some embodiments and application scenarios thereof with reference to the accompanying drawings.

FIG. 2 is a flowchart of a terminal operation method according to an embodiment of this application. As shown in FIG. 2, the terminal operation method includes the following steps.

Step 101: A terminal receives at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource.

The RO resource is a physical random access channel transmission occasion (PRACH transmission occasion) resource, and may also be referred to as a random access channel occasion (RACH occasion) resource. The PO resource is a physical uplink shared channel occasion (PUSCH occasion) resource. The PO resource may be used for MsgA of a 2-step RACH.

Step 102: The terminal performs a first operation based on the at least one RACH configuration, where the first operation includes at least one of the following:
determining validity of the target resource; and
determining whether to transmit a random access message on the target resource.

The random access message may include information or a channel related to random access. For example, the information related to random access may include at least one of the following: Msg1, MsgA, and Msg3. Msg3 may include a repetition (repetition) message. The channel related to random access may include at least one of the following: PRACH and PUSCH.

It should be understood that the determining validity of the target resource may be determining whether the target resource is valid. The determining validity of the target resource may include determining, based on a time division multiplexing TDD configuration and/or a frequency domain transmission format, whether the target resource is valid.

In addition, the determining whether to transmit a random access message on the target resource may include: determining, based on at least one of a time domain transmission format and a frequency domain transmission format, whether to transmit the random access message on a second resource in the target resource, where the second resource includes at least one of a physical random access channel PRACH resource and a physical uplink shared channel PUSCH resource.

It should be noted that the terminal operation method may be used for an FDD spectrum and/or a TDD spectrum. The terminal operation method may be used for a licensed frequency band and/or an unlicensed frequency band. The terminal operation method may be further used in a single-carrier scenario and/or a multi-carrier scenario.

In this embodiment of this application, the terminal receives the at least one random access channel RACH configuration transmitted by the network-side device, where each of the at least one RACH configuration includes the at least one target resource, and the target resource includes at least one of the physical random access channel transmission occasion RO resource and the physical uplink shared channel occasion PO resource; and the terminal performs the first operation based on the at least one RACH configuration, where the first operation includes at least one of the following: determining validity of the target resource; and determining whether to transmit the random access message on the target resource. In this way, the terminal performs the first operation based on the at least one RACH configuration configured by the network-side device, so that a probability of RACH transmission failure can be reduced.

Optionally, that the terminal performs a first operation based on the at least one RACH configuration includes:
the terminal performs the first operation based on a first configuration and the at least one RACH configuration, where
the first configuration includes either of the following:
   a configuration of a flexible duplex mode; and
   a configuration of a flexible time division multiplexing (Time Division Duplex, TDD) mode.

In this implementation, the terminal performs the first operation based on either of the configuration of the flexible duplex mode and the configuration of the flexible TDD mode, and the at least one RACH configuration. In this way, a probability of RACH transmission failure caused by a collision between a RACH resource and a transmission resource of the terminal in the flexible duplex mode or the flexible TDD mode can be reduced, and a probability of RACH transmission success can be increased.

Optionally, the target resource does not overlap a first resource;
or
the target resource overlaps a first resource, where
the first resource includes at least one of a time domain resource and a frequency domain resource corresponding to the first configuration.

The time domain resource corresponding to the first configuration may include at least one of the following:
a subframe (Subframe), a slot (slot), a sub-slot (sub-slot), and a symbol (symbol).

The frequency domain resource corresponding to the first configuration may include at least one of the following:
a bandwidth part (Bandwidth Part, BWP), a subband set (subband set), a subband (subband), and a physical resource block (Physical Resource Block, PRB).

It should be understood that the overlapping may include overlapping of some resources or overlapping of all resources. That the target resource does not overlap a first resource may be that the target resource does not completely overlap the first resource, or that there is no overlapping part between the target resource and the first resource.

In an implementation, the first resource may also be referred to as a full duplex (Full duplex) resource, or a flexible duplex (Flexible duplex) resource.

It should be understood that, that the target resource does not overlap a first resource may be that the target resource is not configured on a resource overlapping the first resource, and/or that the first resource is not configured on a resource overlapping the target resource.

In an implementation, that the target resource does not overlap a first resource may be that the target resource overlaps neither the time domain resource nor the frequency domain resource corresponding to the first configuration.

In addition, that the target resource does not overlap a first resource may be that the target resource is not configured on the time domain resource or frequency domain resource corresponding to the first configuration.

In this implementation, the target resource does not overlap the first resource, so that RACH transmission failure caused by a resource collision can be avoided; or the target resource overlaps the first resource, and the terminal performs the first operation based on either of the configuration of the flexible duplex mode and the configuration of the flexible TDD mode, and the at least one RACH configuration. In this way, the probability of RACH transmission failure caused by the collision between the RACH resource and the transmission resource of the terminal in the flexible duplex mode or the flexible TDD mode can be reduced.

Optionally, the first operation includes:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

That the target resource overlapping the first resource is invalid may be that the terminal does not transmit the channel or information related to random access on the target resource overlapping the first resource, and/or that the target resource overlapping the first resource is not associated with a reference signal such as an SSB.

That the first resource overlapping the target resource is invalid may be that the terminal does not perform transmitting or receiving on the first resource overlapping the target resource, or that a transmission format on the first resource overlapping the target resource cannot be changed, that is, the first resource is equivalent to a half-duplex resource.

In addition, that the target resource overlapping the first resource is invalid may be that when the target resource is configured on the first resource, the target resource is invalid. The network-side device may configure the target resource on the first resource, but the target resource overlapping the first resource is invalid.

In an implementation, the target resource is invalid on the time domain resource corresponding to the first configuration; and/or the target resource is invalid on the frequency domain resource corresponding to the first configuration.

In addition, that the first resource overlapping the target resource is invalid may be that the first resource may overlap the target resource, but the first configuration is invalid in a time period and/or a frequency band predefined or configured by the network for the overlapping part overlapping the target resource. For example, "a time period" may be a slot, or a subframe, or a frame (frame). "A frequency band" may be a subband, or a group of subbands, or a BWP. Being in this specific time period or frequency band overlapping the target resource means that the first resource is not valid.

In this implementation, in the case that the target resource overlaps the first resource, determining that the target resource overlapping the first resource is invalid can reduce the probability of RACH transmission failure caused by the resource collision; determining, based on the time division multiplexing TDD configuration and/or the frequency domain transmission format, whether the target resource is valid can avoid RACH transmission failure caused by directly using the target resource for RACH transmission; and determining that the first resource overlapping the target resource is invalid can reduce the probability of RACH transmission failure caused by the resource collision.

Optionally, the determining, based on a TDD configuration and/or a frequency domain transmission format, whether the target resource is valid includes:
determining that the target resource is valid in a case that at least one of the following conditions is met:
the target resource is on a time domain resource whose time domain transmission format is uplink UL;
the target resource is on a time domain resource whose time domain transmission format is flexible;
the target resource is on a frequency domain resource whose frequency domain transmission format is UL;
the target resource is on a frequency domain resource whose frequency domain transmission format is flexible; and
the target resource is on the time domain resource and/or the frequency domain resource of the first resource.

The determining, based on a TDD configuration and/or a frequency domain transmission format, whether the target resource is valid may include:
determining, in at least one of the following seven implementations, whether the target resource is valid:

First implementation:
determining at least one of the following in a case that the target resource is determined as valid on a time domain resource whose time domain transmission format is UL:
the target resource is invalid on a time domain resource whose time domain transmission format is downlink DL; and
the target resource is invalid on a time domain resource whose time domain transmission format is flexible.

In this implementation, whether the target resource is valid is determined only by the time domain transmission format.

Second implementation:
determining that the target resource is invalid on a time domain resource whose time domain transmission format is DL in a case that the target resource is determined as valid on a time domain resource whose time domain transmission format is UL and/or a time domain resource whose time domain transmission format is flexible.

In this implementation, whether the target resource is valid is determined only by the time domain transmission format.

Third implementation:
determining at least one of the following in a case that the target resource is determined as valid on a time domain resource whose time domain transmission format is UL and on a frequency domain resource whose frequency domain transmission format is UL:
the target resource is invalid on a time domain resource whose time domain transmission format is DL;
the target resource is invalid on a time domain resource whose time domain transmission format is flexible;
the target resource is invalid on a time domain resource whose time domain transmission format is UL and on a frequency domain resource whose frequency domain transmission format is DL;
the target resource is invalid on a time domain resource whose time domain transmission format is UL and on a frequency domain resource whose frequency domain transmission format is flexible; and
the target resource overlapping a guard band is invalid on a time domain resource whose time domain transmission format is UL.

Fourth implementation:
determining at least one of the following in a case that the target resource is determined as valid on a time domain resource whose time domain transmission format is UL and/or on a time domain resource whose time domain transmission format is flexible, and on a frequency domain resource whose frequency domain transmission format is UL:
the target resource is invalid on a time domain resource whose time domain transmission format is DL;
the target resource is invalid on a time domain resource whose time domain transmission format is UL and on a frequency domain resource whose frequency domain transmission format is DL;
the target resource is invalid on a time domain resource whose time domain transmission format is UL and on a frequency domain resource whose frequency domain transmission format is flexible;
the target resource is invalid on a time domain resource whose time domain transmission format is flexible and on a frequency domain resource whose frequency domain transmission format is DL;
the target resource is invalid on a time domain resource whose time domain transmission format is flexible and on a frequency domain resource whose frequency domain transmission format is flexible; and
the target resource overlapping a guard band is invalid on a time domain resource whose time domain transmission format is UL and on a time domain resource whose time domain transmission format is flexible.

Fifth implementation:
determining at least one of the following in a case that the target resource is determined as valid on a time domain resource whose time domain transmission format is UL, and on a frequency domain resource whose frequency domain transmission format is UL and/or on a frequency domain resource whose frequency domain transmission format is flexible:
the target resource is invalid on a time domain resource whose time domain transmission format is DL;
the target resource is invalid on a time domain resource whose time domain transmission format is flexible;
the target resource is invalid on a time domain resource whose time domain transmission format is UL and on a frequency domain resource whose frequency domain transmission format is DL; and
the target resource overlapping a guard band is invalid on a time domain resource whose time domain transmission format is UL.

Sixth implementation:
determining at least one of the following in a case that the target resource is determined as valid on a time domain resource whose time domain transmission format is UL and/or on a time domain resource whose time domain transmission format is flexible, and on a frequency domain resource whose frequency domain transmission format is UL and/or on a frequency domain resource whose frequency domain transmission format is flexible:
the target resource is invalid on a time domain resource whose time domain transmission format is DL;
the target resource is invalid on a time domain resource whose time domain transmission format is UL and on a frequency domain resource whose frequency domain transmission format is DL;
the target resource is invalid on a time domain resource whose time domain transmission format is flexible and on a frequency domain resource whose frequency domain transmission format is DL; and
the target resource overlapping a guard band is invalid on a time domain resource whose time domain transmission format is UL and a time domain resource whose time domain transmission format is flexible.

Seventh implementation:
determining that the target resource is valid on a time domain resource whose time domain transmission format is DL and on a frequency domain resource whose frequency domain transmission format is UL.

It should be noted that one or more of the foregoing seven implementations may be determined by a network configuration to determine whether the target resource is valid.

It should be noted that in the related art, a RACH resource may be configured on a TDD resource, and in this case, validity of a RACH occasion (occasion) needs to be determined based on a TDD configuration (configuration). If a RO collides with a DL resource, the RO is invalid. In addition, when UE initiates a RACH in a valid RO, if a transmission direction of a resource in which the RO is located collides with DL, transmission of the RACH is canceled. These processes of determining validity of the RACH occasion are based on the time domain transmission format, including a TDD configuration or an SFI.

In flexible duplex mode or flexible TDD mode, different frequency domain resources may have different transmission directions on a specific time domain resource. By referring to a transmission direction in frequency domain, the RACH resource is configured, validity of the RACH resource is determined, and RACH transmission is performed to increase the probability of RACH transmission success.

Optionally, the determining, based on a TDD configuration and/or a frequency domain transmission format, whether the target resource is valid includes:
determining that the target resource is invalid in a case that at least one of the following conditions is met:
the target resource overlaps a time domain resource whose time domain transmission format is downlink DL;
the target resource overlaps a time domain resource whose time domain transmission format is flexible;
the target resource overlaps a frequency domain resource whose frequency domain transmission format is DL;
the target resource overlaps a frequency domain resource whose frequency domain transmission format is flexible;
the target resource overlaps the time domain resource and/or the frequency domain resource of the first resource; and
the target resource overlaps a guard band of the first resource.

Optionally, the determining whether to transmit a random access message on the target resource includes:
determining, based on at least one of a time domain transmission format and a frequency domain transmission format, whether to transmit the random access message on a second resource in the target resource, where the second resource includes at least one of a physical random access channel PRACH resource and a physical uplink shared channel PUSCH resource.

The determining whether to transmit the random access message on a second resource in the target resource may be determining whether to perform RACH transmission on the second resource in the target resource. The time domain transmission format may be a time domain transmission format indicated by the TDD configuration or the SFI, and the frequency domain transmission format may be a time domain transmission format indicated by an FDD configuration or an FFI.

In addition, the second resource includes at least one of the following:
a PRACH resource of Msg1, a PRACH resource of MsgA, a PUSCH resource of MsgA, and a PUSCH resource of Msg3.

It should be noted that the time domain transmission format and the frequency domain transmission format may be indicated separately by the network or indicated together by the network. This is not limited in this embodiment.

In this implementation, whether to transmit the random access message on the second resource in the target resource is determined based on at least one of the time domain transmission format and the frequency domain transmission format. In this way, RACH transmission failure caused by the resource collision can be avoided, and the probability of RACH transmission success can be increased.

Optionally, the random access message is transmitted on the second resource meeting at least one of the following conditions:
the second resource is on a time domain resource whose time domain transmission format is UL;
the second resource is on a time domain resource whose time domain transmission format is flexible;
the second resource is on a frequency domain resource whose frequency domain transmission format is UL;
the second resource is on a frequency domain resource whose frequency domain transmission format is flexible; and
the second resource is on a time domain resource and/or a frequency domain resource of a first resource.

The determining, based on at least one of a time domain transmission format and a frequency domain transmission format, whether to transmit the random access message on a second resource in the target resource may include:
determining, in at least one of the following five implementations, whether to transmit the random access message on the second resource in the target resource:

First implementation:
determining at least one of the following in a case that the random access message is transmitted on the second resource that is on a time domain resource whose time domain transmission format is UL and on a frequency domain resource whose frequency domain transmission format is UL:
not transmitting the random access message on the second resource that is on a time domain resource whose time domain transmission format is DL;
not transmitting the random access message on the second resource that is on a time domain resource whose time domain transmission format is flexible;
not transmitting the random access message on the second resource that is on a time domain resource whose time domain transmission format is UL and on a frequency domain resource whose frequency domain transmission format is DL;
not transmitting the random access message on the second resource that is on a time domain resource whose time domain transmission format is UL and on a frequency domain resource whose frequency domain transmission format is flexible; and
not transmitting the random access message on the second resource that is on a time domain resource whose time domain transmission format is UL and that overlaps a guard band.

Second implementation:
determining at least one of the following in a case that the random access message is transmitted on the second resource that is on a time domain resource whose time domain transmission format is UL and/or on a time domain resource whose time domain transmission format is flexible, and on a frequency domain resource whose frequency domain transmission format is UL:
not transmitting the random access message on the second resource that is on a time domain resource whose time domain transmission format is DL;
not transmitting the random access message on the second resource that is on a time domain resource whose time domain transmission format is UL and on a frequency domain resource whose frequency domain transmission format is DL;
not transmitting the random access message on the second resource that is on a time domain resource whose time domain transmission format is UL and on a frequency domain resource whose frequency domain transmission format is flexible;
not transmitting the random access message on the second resource that is on a time domain resource whose time domain transmission format is flexible and on a frequency domain resource whose frequency domain transmission format is DL;
not transmitting the random access message on the second resource that is on a time domain resource whose time domain transmission format is flexible and on a frequency domain resource whose frequency domain transmission format is flexible; and
not transmitting the random access message on the second resource that is on a time domain resource whose time domain transmission format is UL and on a time domain resource whose time domain transmission format is flexible and that overlaps a guard band.

Third implementation:
determining at least one of the following in a case that the random access message is transmitted on the second resource that is on a time domain resource whose time domain transmission format is UL, and on a frequency domain resource whose frequency domain transmission format is UL and/or on a frequency domain resource whose frequency domain transmission format is flexible:
not transmitting the random access message on the second resource that is on a time domain resource whose time domain transmission format is DL;
not transmitting the random access message on the second resource that is on a time domain resource whose time domain transmission format is flexible;
not transmitting the random access message on the second resource that is on a time domain resource whose time domain transmission format is UL and on a frequency domain resource whose frequency domain transmission format is DL; and
not transmitting the random access message on the second resource that is on a time domain resource whose time domain transmission format is UL and that overlaps a guard band.

Fourth implementation:
determining at least one of the following in a case that the random access message is transmitted on the second resource that is on a time domain resource whose time domain transmission format is UL and/or on a time domain resource whose time domain transmission format is flexible, and on a frequency domain resource whose frequency domain transmission format is UL and/or on a frequency domain resource whose frequency domain transmission format is flexible:
not transmitting the random access message on the second resource that is on a time domain resource whose time domain transmission format is DL;
not transmitting the random access message on the second resource that is on a time domain resource whose time domain transmission format is UL and on a frequency domain resource whose frequency domain transmission format is DL;
not transmitting the random access message on the second resource that is on a time domain resource whose time domain transmission format is flexible and on a frequency domain resource whose frequency domain transmission format is DL; and
not transmitting the random access message on the second resource that is on a time domain resource whose time domain transmission format is UL and on a time domain resource whose time domain transmission format is flexible and that overlaps a guard band.

Fifth implementation:
transmitting the random access message on the second resource that is on a time domain resource whose time domain transmission format is DL, and on a frequency domain resource whose frequency domain transmission format is UL and/or on a frequency domain resource whose frequency domain transmission format is flexible.

It should be understood that not transmitting the random access message may be not performing RACH transmission.

It should be noted that one or more of the foregoing five implementations may be determined by a network configuration to determine whether to transmit the random access message on the second resource in the target resource.

Optionally, the random access message is not transmitted on the second resource meeting at least one of the following conditions:
the second resource overlaps a time domain resource whose time domain transmission format is downlink DL;
the second resource overlaps a time domain resource whose time domain transmission format is flexible;
the second resource overlaps a frequency domain resource whose frequency domain transmission format is DL;
the second resource overlaps a frequency domain resource whose frequency domain transmission format is flexible;
the second resource overlaps a time domain resource and/or a frequency domain resource of a first resource; and
the second resource overlaps a guard band of the first resource.

Optionally, the at least one RACH configuration meets any one of the following conditions:
the at least one RACH configuration is configured on an initial (initial) bandwidth part BWP;
the at least one RACH configuration is configured on an active (active) BWP; and
the at least one RACH configuration is configured on an initial BWP and an active BWP respectively.

In an implementation, the at least one RACH configuration may be configured on a same initial BWP.

In an implementation, the at least one RACH configuration may be configured on a plurality of different initial BWPs.

In an implementation, in a case that the active BWP does not include the initial BWP, the at least one RACH configuration may be configured on the initial BWP and the active BWP.

Optionally, in a case that the active BWP includes the initial BWP, the at least one RACH configuration is configured on the initial BWP.

In an implementation, the at least one RACH configuration meets any one of the following conditions:
in a case that the at least one RACH configuration is one RACH configuration, the RACH configuration may be configured on an initial bandwidth part BWP;
in a case that the at least one RACH configuration is one RACH configuration, and that the active BWP includes the initial BWP, a RO resource included in the RACH configuration belongs to the initial BWP;
in a case that the at least one RACH configuration is one RACH configuration, and that the active BWP does not include the initial BWP, the RACH configuration may be configured on the active BWP;
in a case that the at least one RACH configuration is a plurality of RACH configurations, at least one of the plurality of RACH configurations may be configured on the initial BWP;
in a case that the at least one RACH configuration is a plurality of RACH configurations, and that the active BWP includes the initial BWP, a RO resource included in at least one of the plurality of RACH configurations belongs to the initial BWP;
in a case that the at least one RACH configuration is a plurality of RACH configurations, and that the active BWP includes the initial BWP, RO resources included in the plurality of RACH configurations all belong to the initial BWP;
in a case that the at least one RACH configuration is a plurality of RACH configurations, and that the active BWP does not include the initial BWP, at least one of the plurality of RACH configurations may be configured on the initial BWP; and
in a case that the at least one RACH configuration is a plurality of RACH configurations, and that the active BWP does not include the initial BWP, the plurality of RACH configurations may be configured on the active BWP.

It should be noted that if a plurality of RACH configurations are configured on one BWP, the network may configure or indicate a RACH configuration used for a second type of terminal in the plurality of configured RACH configurations. If the RACH configuration is not indicated, it may be considered by default that the RACH configuration is a RACH configuration used for a first type of terminal.

In addition, in a case that the at least one RACH configuration is one RACH configuration, and that the active BWP includes the initial BWP, a RO resource included in the RACH configuration belongs to the initial BWP, where the active BWP is an active BWP for the second type of terminal.

Optionally, the at least one RACH configuration meets any one of the following conditions:
in a case that the at least one RACH configuration is one RACH configuration, preamble resources corresponding to each RO included in the RACH configuration include a first preamble set and a second preamble set; or
in a case that the at least one RACH configuration is a plurality of RACH configurations, ROs corresponding to different RACH configurations in the plurality of RACH configurations are respectively associated with different synchronization signal blocks SSBs.

The first preamble set may include a legacy preamble set (legacy preamble set), the first preamble set may be used for the first type of terminal, and the first type of terminal may include a terminal whose terminal capability does not support an evolved full-duplex mode, and/or a terminal whose terminal capability does not support an enhanced flexible TDD mode. The second preamble set may include a full duplex preamble set (full duplex preamble set), the second preamble set may be used for the second type of terminal, and the second type of terminal may include a terminal whose terminal capability supports an evolved full-duplex mode, and/or a terminal whose terminal capability supports an enhanced flexible TDD mode.

It should be understood that the at least one RACH configuration is one RACH configuration. It may be considered that terminals in a cell covered by the network-side device share the target resource of the RACH configuration.

In addition, the first preamble set and the second preamble set may be respectively associated with different SSBs, or may be associated with a same SSB.

In addition, each of the first preamble set and the second preamble set may be further divided into group (group) A and group B.

Optionally, the first preamble set and the second preamble set are respectively associated with different SSBs.

That the first preamble set and the second preamble set are respectively associated with different SSBs may be that the first preamble set and the second preamble set are respectively mapped to the SSBs.

In addition, the first preamble set may be preamble (preamble) set 1 and the second preamble set may be preamble set 2.

In an implementation, the network-side device may configure a parameter for each of preamble set 1 and preamble set 2, for indicating the number of preambles mapped to one SSB, for example, the number of preambles in preamble set 1 that are mapped to one SSB (Number of PreamblesPerSSB for preamble set 1), and the number of preambles in preamble set 2 that are mapped to one SSB (Number of PreamblesPerSSB for preamble set 2).

In an implementation, the network-side device may configure the total number of preambles (total number of preambles) for each of preamble set 1 and preamble set 2, the number of SSBs per RO (number of SSBs per RO), and the number of preambles per SSB per RO (number of preamble per SSB per RO).

In an implementation, a size of a preamble set, a start preamble index, an end preamble index, and the like may be configured by the network.

Optionally, in a case that the at least one RACH configuration is a plurality of RACH configurations, the plurality of RACH configurations include a first RACH configuration for a first type of terminal and a second RACH configuration for a second type of terminal.

The first type of terminal may be a terminal whose terminal capability does not support an evolved full-duplex mode, and/or a terminal whose terminal capability does not support an enhanced flexible TDD mode. The second type of terminal may be a terminal whose terminal capability supports the evolved full-duplex mode, and/or a terminal whose terminal capability supports the enhanced flexible TDD mode.

In addition, the determining, based on a TDD configuration and/or a frequency domain transmission format, whether the target resource is valid may be determining, based on the TDD configuration and/or the frequency domain transmission format, whether the target resource is valid in a case that the terminal is the second type of terminal.

It should be understood that the plurality of RACH configurations include the first RACH configuration for the first type of terminal and the second RACH configuration for the second type of terminal. Therefore, when the network works in the full-duplex mode, by using the first RACH configuration and the second RACH configuration transmitted by the network-side device, both the first type of terminal and the second type of terminal can obtain required RACH configurations. Therefore, it can be ensured that all terminals have available RACH resources for random access.

It should be noted that the plurality of RACH configurations include the first RACH configuration for the first type of terminal and the second RACH configuration for the second type of terminal. It may be considered that different RACH configurations are configured independently, that is, target resources included in different RACH configurations are not shared. A target resource included in the first RACH configuration is used for the first type of terminal and a target resource included in the second RACH configuration is used for the second type of terminal.

In an implementation, the first RACH configuration and the second RACH configuration are respectively configured on different BWPs; or the first RACH configuration and the second RACH configuration may be configured on different time-frequency resources on a same BWP.

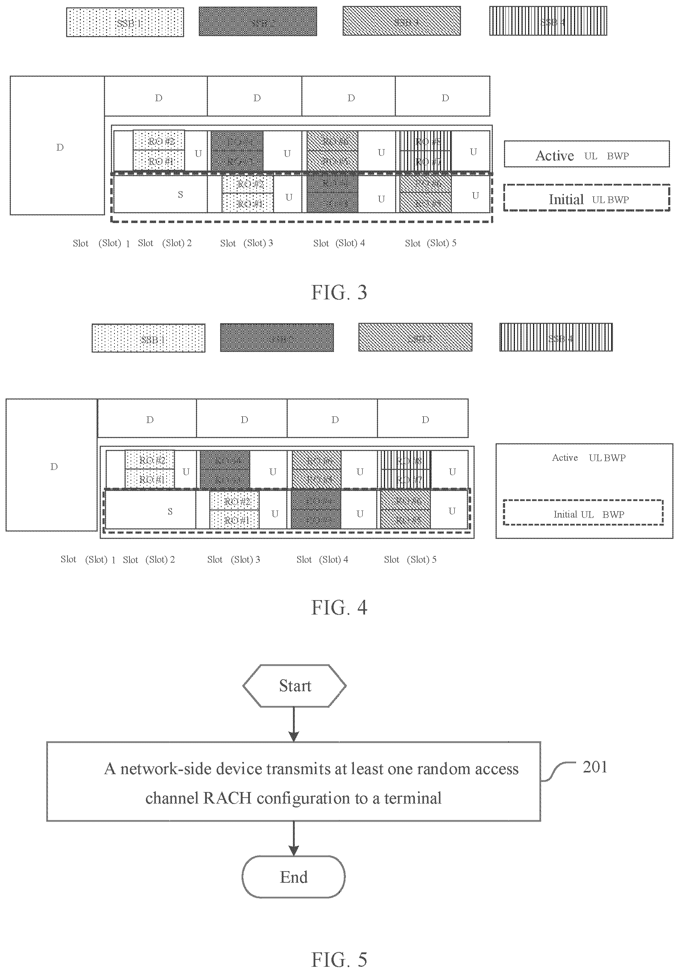

For example, in a case that the first RACH configuration and the second RACH configuration are respectively configured on different BWPs, as shown in FIG. 3, the active UL BWP does not include the initial UL BWP, the first RACH configuration may be configured on the initial BWP, and the second RACH configuration may be configured on the active BWP, where D identifies a DL transmission direction of a slot, U identifies a UL transmission direction of a slot, and S identifies that a transmission direction of a flexible slot is changed by the SFI. In FIG. 3, RO #1 and RO #2 are associated with SSB 1, RO #3 and RO #4 are associated with SSB 2, RO #5 and RO #6 are associated with SSB 3, and RO #7 and RO #8 are associated with SSB 4.

For example, in a case that the first RACH configuration and the second RACH configuration are configured on different time-frequency resources of a same BWP, as shown in FIG. 4, the active UL BWP includes the initial UL BWP, the first RACH configuration may be configured on a resource in which the initial BWP of the active BWP is located, and the second RACH configuration may be configured on a resource in which a non-initial BWP of the active BWP is located, where D identifies a DL transmission direction of a slot, U identifies a UL transmission direction of a slot, and S identifies that a transmission direction of a flexible slot is changed by the SFI. In FIG. 4, RO #1 and RO #2 are associated with SSB 1, RO #3 and RO #4 are associated with SSB 2, RO #5 and RO #6 are associated with SSB 3, and RO #7 and RO #8 are associated with SSB 4.

It should be noted that the number of RO resources included in the RACH configuration, a start position and period of a time-frequency domain resource, and the like may be configured by the network-side device.

Optionally, that the terminal performs a first operation based on the at least one RACH configuration further includes:
the terminal determines, based on network signal quality, whether to use the first RACH configuration or the second RACH configuration.

In an implementation, the terminal may use the second RACH configuration when determining that network signal quality meets a preset condition. The preset condition may be a condition representing better network signal quality, or a condition representing poor network signal quality. To implement a greater throughput (throughput), the preset condition may be a condition representing better network signal quality. To implement wide coverage (coverage), the preset condition may be a condition representing poor network signal quality.

Optionally, in a case that the at least one RACH configuration includes a plurality of RACH configurations, different RACH configurations correspond to different reference signal received power RSRP thresholds or priorities.

In an implementation, when target resources of the plurality of RACH configurations are not shared, that is, when the plurality of RACH configurations are independently configured, different RACH configurations correspond to different reference signal received power (Reference Signal Received Power, RSRP) thresholds or priorities.

For example, the plurality of RACH configurations include a first RACH configuration for a first type of terminal and a second RACH configuration for a second type of terminal, and a priority of the second RACH configuration is higher than a priority of the first RACH configuration; and/or an RSRP threshold corresponding to the second RACH configuration is lower than an RSRP threshold corresponding to the first RACH configuration.

In this implementation, different RACH configurations correspond to different reference signal received power RSRP thresholds or priorities, so that the terminal can conveniently select a RACH configuration from the plurality of RACH configurations based on the RSRP thresholds corresponding to the RACH configurations or the priorities corresponding to the RACH configurations.

Optionally, that the terminal performs a first operation based on the at least one RACH configuration further includes:
the terminal selects a target resource from the at least one target resource based on network indication information, an RSRP threshold corresponding to the RACH configuration, or a priority corresponding to the RACH configuration.

In a case that the terminal is a second type of terminal, the terminal may select, based on the network indication information, the RSRP threshold corresponding to the RACH configuration, or the priority corresponding to the RACH configuration, a target resource from the target resources included in the at least one RACH configuration. For example, a target resource of the second RACH configuration may be preferentially selected.

Optionally, the at least one RACH configuration is a contention-based two-step RACH configuration; or the at least one RACH configuration is a contention-based four-step RACH configuration.

In a case that the at least one RACH configuration is the contention-based two-step RACH configuration, the target resource includes at least one PO resource.

In addition, the two-step RACH configuration is a 2-step RACH configuration. The four-step RACH configuration is a 4-step RACH configuration.

Optionally, the at least one RACH configuration is transmitted by using at least one of the following:
broadcast signaling; and
radio resource control (Radio Resource Control, RRC) signaling.

In this implementation, the terminal receives, by using the broadcast signaling or RRC signaling, the at least one random access channel RACH configuration transmitted by the network-side device. Therefore, a RACH delay can be reduced, and the probability of RACH transmission success can be increased.

FIG. 5 is a flowchart of a terminal operation method according to an embodiment of this application. As shown in FIG. 5, the terminal operation method includes the following step.

Step 201: A network-side device transmits at least one random access channel RACH configuration to a terminal.

Each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where
the first operation includes at least one of the following:
determining validity of the target resource; and
determining whether to transmit a random access message on the target resource.

It should be noted that this embodiment is used as an implementation of the network-side device corresponding to the embodiment shown in FIG. 2. For a specific implementation of this embodiment, refer to the related description of the embodiment shown in FIG. 2. To avoid repetition, details are not described herein again. In this way, the terminal performs the first operation based on the at least one RACH configuration configured by the network-side device, so that a probability of RACH transmission failure can be reduced.

The terminal operation method provided in the embodiments of this application may be performed by a terminal operation apparatus. A terminal operation apparatus provided in the embodiments of this application is described by assuming that the terminal operation method is performed by the terminal operation apparatus in the embodiments of this application.

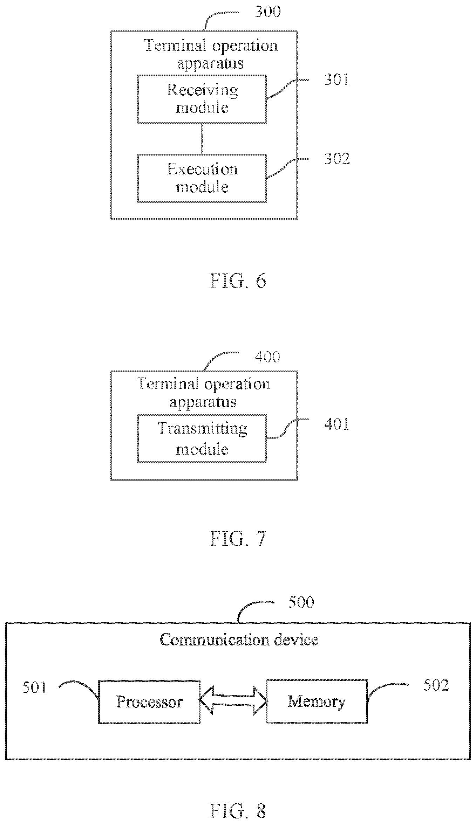

FIG. 6 is a structural diagram of a terminal operation apparatus according to an embodiment of this application. A terminal may include the terminal operation apparatus. As shown in FIG. 6, the terminal operation apparatus 300 includes:
a receiving module 301, configured to receive at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource; and
an execution module 302, configured to perform a first operation based on the at least one RACH configuration, where the first operation includes at least one of the following:
   determining validity of the target resource; and
   determining whether to transmit a random access message on the target resource.

Optionally, the execution module is specifically configured to:
perform the first operation based on a first configuration and the at least one RACH configuration, where
the first configuration includes either of the following:
   a configuration of a flexible duplex mode; and
   a configuration of a flexible time division multiplexing TDD mode.

Optionally, the target resource does not overlap a first resource;
or
the target resource overlaps a first resource, where
the first resource includes at least one of a time domain resource and a frequency domain resource corresponding to the first configuration.

Optionally, the first operation includes:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

Optionally, the determining, based on a TDD configuration and/or a frequency domain transmission format, whether the target resource is valid includes:
determining that the target resource is valid in a case that at least one of the following conditions is met:
the target resource is on a time domain resource whose time domain transmission format is uplink UL;
the target resource is on a time domain resource whose time domain transmission format is flexible;
the target resource is on a frequency domain resource whose frequency domain transmission format is UL;
the target resource is on a frequency domain resource whose frequency domain transmission format is flexible; and
the target resource is on the time domain resource and/or the frequency domain resource of the first resource.

Optionally, the determining, based on a TDD configuration and/or a frequency domain transmission format, whether the target resource is valid includes:
determining that the target resource is invalid in a case that at least one of the following conditions is met:
the target resource overlaps a time domain resource whose time domain transmission format is downlink DL;
the target resource overlaps a time domain resource whose time domain transmission format is flexible;
the target resource overlaps a frequency domain resource whose frequency domain transmission format is DL;
the target resource overlaps a frequency domain resource whose frequency domain transmission format is flexible;
the target resource overlaps the time domain resource and/or the frequency domain resource of the first resource; and
the target resource overlaps a guard band of the first resource.

Optionally, the determining whether to transmit a random access message on the target resource includes:
determining, based on at least one of a time domain transmission format and a frequency domain transmission format, whether to transmit the random access message on a second resource in the target resource, where the second resource includes at least one of a physical random access channel PRACH resource and a physical uplink shared channel PUSCH resource.

Optionally, the random access message is transmitted on the second resource meeting at least one of the following conditions:
the second resource is on a time domain resource whose time domain transmission format is UL;
the second resource is on a time domain resource whose time domain transmission format is flexible;
the second resource is on a frequency domain resource whose frequency domain transmission format is UL;
the second resource is on a frequency domain resource whose frequency domain transmission format is flexible; and
the second resource is on a time domain resource and/or a frequency domain resource of a first resource.

Optionally, the random access message is not transmitted on the second resource meeting at least one of the following conditions:
the second resource overlaps a time domain resource whose time domain transmission format is downlink DL;
the second resource overlaps a time domain resource whose time domain transmission format is flexible;
the second resource overlaps a frequency domain resource whose frequency domain transmission format is DL;
the second resource overlaps a frequency domain resource whose frequency domain transmission format is flexible;
the second resource overlaps a time domain resource and/or a frequency domain resource of a first resource; and
the second resource overlaps a guard band of the first resource.

Optionally, the at least one RACH configuration meets any one of the following conditions:
the at least one RACH configuration is configured on an initial bandwidth part BWP;
the at least one RACH configuration is configured on an active BWP; and
the at least one RACH configuration is configured on an initial BWP and an active BWP respectively.

Optionally, in a case that the active BWP includes the initial BWP, the at least one RACH configuration is configured on the initial BWP.

Optionally, the at least one RACH configuration meets any one of the following conditions:
in a case that the at least one RACH configuration is one RACH configuration, preamble resources corresponding to each RO included in the RACH configuration include a first preamble set and a second preamble set; or
in a case that the at least one RACH configuration is a plurality of RACH configurations, ROs corresponding to different RACH configurations in the plurality of RACH configurations are respectively associated with different synchronization signal blocks SSBs.

Optionally, the first preamble set and the second preamble set are respectively associated with different SSBs.

Optionally, in a case that the at least one RACH configuration is a plurality of RACH configurations, the plurality of RACH configurations include a first RACH configuration for a first type of terminal and a second RACH configuration for a second type of terminal.

Optionally, the execution module is further configured to:
determine, based on network signal quality, whether to use the first RACH configuration or the second RACH configuration.

Optionally, in a case that the at least one RACH configuration includes a plurality of RACH configurations, different RACH configurations correspond to different reference signal received power RSRP thresholds or priorities.

Optionally, the execution module is further configured to:
select a target resource from the at least one target resource based on network indication information, an RSRP threshold corresponding to the RACH configuration, or a priority corresponding to the RACH configuration.

Optionally, the at least one RACH configuration is a contention-based two-step RACH configuration; or the at least one RACH configuration is a contention-based four-step RACH configuration.

Optionally, the at least one RACH configuration is transmitted by using at least one of the following:
broadcast signaling; and
radio resource control RRC signaling.

According to the terminal operation apparatus in this embodiment of this application, the terminal performs the first operation based on the at least one RACH configuration configured by the network-side device, so that a probability of RACH transmission failure can be reduced.

The terminal operation apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The terminal operation apparatus provided in this embodiment of this application can implement each process implemented in the method embodiment in FIG. 2, with the same technical effect achieved. To avoid repetition, details are not described herein again.

FIG. 7 is a structural diagram of a terminal operation apparatus according to an embodiment of this application. A network-side device includes the terminal operation apparatus. As shown in FIG. 7, the terminal operation apparatus 400 includes:
a transmitting module 401, configured to transmit at least one random access channel RACH configuration to a terminal, where
each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where
the first operation includes at least one of the following:
   determining validity of the target resource; and
   determining whether to transmit a random access message on the target resource.

Optionally, the at least one RACH configuration is used by the terminal to perform the first operation based on a first configuration and the at least one RACH configuration, where
the first configuration includes either of the following:
a configuration of a flexible duplex mode; and
a configuration of a flexible time division multiplexing TDD mode.

Optionally, the target resource does not overlap a first resource;
or
the target resource overlaps a first resource, where
the first resource includes at least one of a time domain resource and a frequency domain resource corresponding to the first configuration.

Optionally, the first operation includes:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

According to the terminal operation apparatus in this embodiment of this application, the terminal performs the first operation based on the at least one RACH configuration configured by the network-side device, so that a probability of RACH transmission failure can be reduced.

The terminal operation apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The terminal operation apparatus provided in this embodiment of this application can implement each process implemented in the method embodiment in FIG. 5, with the same technical effect achieved. To avoid repetition, details are not described herein again.

Optionally, as shown in FIG. 8, an embodiment of this application further provides a communication device 500, including a processor 501 and a memory 502. The memory 502 stores a program or instructions capable of running on the processor 501. For example, when the communication device 500 is a terminal, and the program or instructions are executed by the processor 501, the steps of the foregoing embodiment of the terminal operation method are implemented, with the same technical effect achieved. When the communication device 500 is a network-side device, and the program or instructions are executed by the processor 501, the steps of the foregoing embodiment of the terminal operation method on the network-side device are implemented, with the same technical effect achieved. To avoid repetition, details are not described herein again.

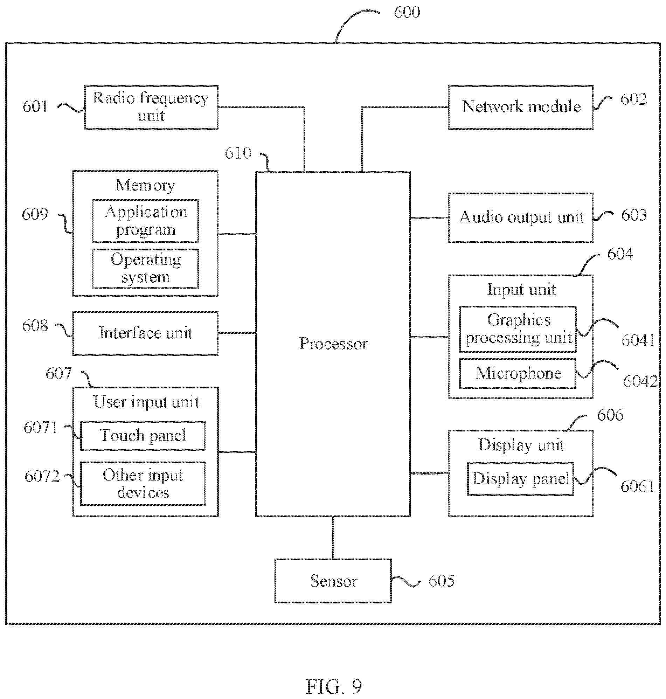

An embodiment of this application further provides a terminal, including a processor and a communication interface. The communication interface is configured to receive at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource. The processor is configured to perform a first operation based on the at least one RACH configuration, where the first operation includes at least one of the following: determining validity of the target resource; and determining whether to transmit a random access message on the target resource. The terminal embodiment corresponds to the foregoing terminal-side method embodiment, and each implementation process and implementation of the foregoing method embodiment can be applied to the terminal embodiment, with the same technical effect achieved. Specifically, FIG. 9 is a schematic diagram of a hardware structure of a terminal for implementing an embodiment of this application.

The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) supplying power to all components. The power supply may be logically connected to the processor 610 through a power management system. In this way, functions such as charge management, discharge management, and power consumption management are implemented by using the power management system. The terminal structure shown in FIG. 9 does not constitute a limitation on the terminal. The terminal may include more or fewer components than those shown in the figure, or some components are combined, or component arrangements are different. Details are not described herein again.

It should be understood that, in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (such as a camera) in a video capture mode or an image capture mode. The display unit 606 may include a display panel 6061, and the display panel 6061 may be configured in a form of a liquid crystal display, an organic light-emitting diode, or the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 601 may transmit the downlink data to the processor 610 for processing. In addition, the radio frequency unit 601 may transmit uplink data to the network-side device. Usually, the radio frequency unit 601 includes but is not limited to an antenna, an amplifier, a transceiver, a coupler, a low noise amplifier, a duplexer, and the like.

The memory 609 may be configured to store software programs or instructions and various data. The memory 609 may primarily include a first storage area for storing programs or instructions and a second storage area for storing data. The first storage area may store an operating system, an application program or instructions required by at least one function (such as an audio play function and an image play function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (DirectRambus RAM, DRRAM). The memory 609 in this embodiment of this application includes but is not limited to these and any other suitable types of memories.

The processor 610 may include one or more processing units. Optionally, the processor 610 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 610.

The radio frequency unit 601 is configured to receive at least one random access channel RACH configuration transmitted by a network-side device, where each of the at least one RACH configuration includes at least one target resource, and the target resource includes at least one of a physical random access channel transmission occasion RO resource and a physical uplink shared channel occasion PO resource.

The processor 610 is configured to perform a first operation based on the at least one RACH configuration, where the first operation includes at least one of the following:
determining validity of the target resource; and
determining whether to transmit a random access message on the target resource.

Optionally, the processor 610 is configured to:
perform the first operation based on a first configuration and the at least one RACH configuration, where
the first configuration includes either of the following:
   a configuration of a flexible duplex mode; and
   a configuration of a flexible time division multiplexing TDD mode.

Optionally, the target resource does not overlap a first resource;
or
the target resource overlaps a first resource, where
the first resource includes at least one of a time domain resource and a frequency domain resource corresponding to the first configuration.

Optionally, the first operation includes:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

Optionally, the determining, based on a TDD configuration and/or a frequency domain transmission format, whether the target resource is valid includes:
determining that the target resource is valid in a case that at least one of the following conditions is met:
the target resource is on a time domain resource whose time domain transmission format is uplink UL;
the target resource is on a time domain resource whose time domain transmission format is flexible;
the target resource is on a frequency domain resource whose frequency domain transmission format is UL;
the target resource is on a frequency domain resource whose frequency domain transmission format is flexible; and
the target resource is on the time domain resource and/or the frequency domain resource of the first resource.

Optionally, the determining, based on a TDD configuration and/or a frequency domain transmission format, whether the target resource is valid includes:
determining that the target resource is invalid in a case that at least one of the following conditions is met:
the target resource overlaps a time domain resource whose time domain transmission format is downlink DL;
the target resource overlaps a time domain resource whose time domain transmission format is flexible;
the target resource overlaps a frequency domain resource whose frequency domain transmission format is DL;
the target resource overlaps a frequency domain resource whose frequency domain transmission format is flexible;
the target resource overlaps the time domain resource and/or the frequency domain resource of the first resource; and
the target resource overlaps a guard band of the first resource.

Optionally, the determining whether to transmit a random access message on the target resource includes:
determining, based on at least one of a time domain transmission format and a frequency domain transmission format, whether to transmit the random access message on a second resource in the target resource, where the second resource includes at least one of a physical random access channel PRACH resource and a physical uplink shared channel PUSCH resource.

Optionally, the random access message is transmitted on the second resource meeting at least one of the following conditions:
the second resource is on a time domain resource whose time domain transmission format is UL;
the second resource is on a time domain resource whose time domain transmission format is flexible;
the second resource is on a frequency domain resource whose frequency domain transmission format is UL;
the second resource is on a frequency domain resource whose frequency domain transmission format is flexible; and
the second resource is on a time domain resource and/or a frequency domain resource of a first resource.

Optionally, the random access message is not transmitted on the second resource meeting at least one of the following conditions:
the second resource overlaps a time domain resource whose time domain transmission format is downlink DL;
the second resource overlaps a time domain resource whose time domain transmission format is flexible;
the second resource overlaps a frequency domain resource whose frequency domain transmission format is DL;
the second resource overlaps a frequency domain resource whose frequency domain transmission format is flexible;
the second resource overlaps a time domain resource and/or a frequency domain resource of a first resource; and
the second resource overlaps a guard band of the first resource.

Optionally, the at least one RACH configuration meets any one of the following conditions:
the at least one RACH configuration is configured on an initial bandwidth part BWP;
the at least one RACH configuration is configured on an active BWP; and
the at least one RACH configuration is configured on an initial BWP and an active BWP respectively.

Optionally, in a case that the active BWP includes the initial BWP, the at least one RACH configuration is configured on the initial BWP.

Optionally, the at least one RACH configuration meets any one of the following conditions:
in a case that the at least one RACH configuration is one RACH configuration, preamble resources corresponding to each RO included in the RACH configuration include a first preamble set and a second preamble set; or
in a case that the at least one RACH configuration is a plurality of RACH configurations, ROs corresponding to different RACH configurations in the plurality of RACH configurations are respectively associated with different synchronization signal blocks SSBs.

Optionally, the first preamble set and the second preamble set are respectively associated with different SSBs.

Optionally, in a case that the at least one RACH configuration is a plurality of RACH configurations, the plurality of RACH configurations include a first RACH configuration for a first type of terminal and a second RACH configuration for a second type of terminal.

Optionally, the processor 610 is further configured to:
determine, based on network signal quality, whether to use the first RACH configuration or the second RACH configuration.

Optionally, in a case that the at least one RACH configuration includes a plurality of RACH configurations, different RACH configurations correspond to different reference signal received power RSRP thresholds or priorities.

Optionally, the processor 610 is further configured to:
select a target resource from the at least one target resource based on network indication information, an RSRP threshold corresponding to the RACH configuration, or a priority corresponding to the RACH configuration.

Optionally, the at least one RACH configuration is a contention-based two-step RACH configuration; or the at least one RACH configuration is a contention-based four-step RACH configuration.

Optionally, the at least one RACH configuration is transmitted by using at least one of the following:
broadcast signaling; and
radio resource control RRC signaling.

According to the terminal in this embodiment of this application, the terminal performs the first operation based on the at least one RACH configuration configured by the network-side device, so that a probability of RACH transmission failure can be reduced.

An embodiment of this application further provides a network-side device, including a processor and a communication interface. The communication interface is configured to transmit at least one random access channel RACH configuration to a terminal, where each of the at least one RACH configuration includes at least one target resource, the target resource includes at least one of a physical random access channel transmission occasion RO resource and a physical uplink shared channel occasion PO resource, and the at least one RACH configuration is used by the terminal to perform a first operation, where the first operation includes at least one of the following: determining validity of the target resource; and determining whether to transmit a random access message on the target resource. The network-side device embodiment corresponds to the foregoing method embodiment of the network-side device, and each implementation process and implementation of the foregoing method embodiment can be applied to the network-side device embodiment, with the same technical effect achieved.

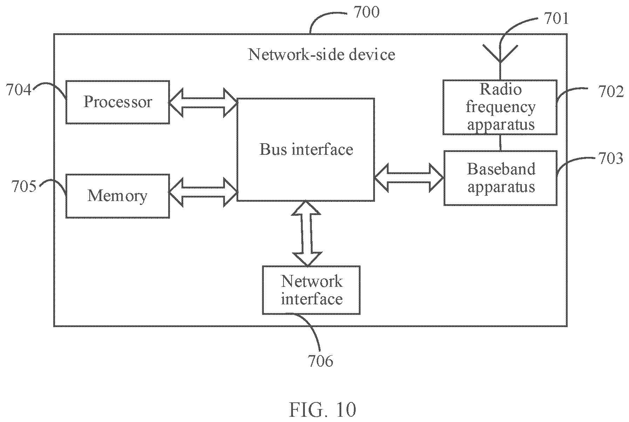

Specifically, an embodiment of this application further provides a network-side device. As shown in FIG. 10, the network-side device 700 includes an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information by using the antenna 701, and transmits the received information to the baseband apparatus 703 for processing. In a downlink direction, the baseband apparatus 703 processes to-be-transmitted information, and transmits the information to the radio frequency apparatus 702; and the radio frequency apparatus 702 processes the received information and then transmits the information out by using the antenna 701.

The method performed by the network-side device in the foregoing embodiment may be implemented in the baseband apparatus 703. The baseband apparatus 703 includes a baseband processor.

The baseband apparatus 703 may include, for example, at least one baseband unit, where a plurality of chips are disposed on the baseband unit. As shown in FIG. 10, one of the chips is, for example, the baseband processor, connected to the memory 705 by using a bus interface, to invoke a program in the memory 705 to perform the operation of the network device shown in the foregoing method embodiment.

The network-side device may further include a network interface 706, where the interface is, for example, a common public radio interface (Common Public Radio Interface, CPRI).

Specifically, the network-side device 700 in this embodiment of this application further includes a program or instructions stored in the memory 705 and capable of running on the processor 704. When the processor 704 invokes the program or instructions in the memory 705, the method performed by each module shown in FIG. 7 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the terminal operation method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the terminal operation method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing terminal operation method, with the same technical effect achieved. To avoid repetition, details are not described herein again.

An embodiment of this application further provides a terminal operation system, including a terminal and a network-side device. The terminal may be configured to perform the steps of the foregoing terminal operation method on the terminal side. The network-side device may be configured to perform the steps of the foregoing terminal operation method on the network-side device.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A terminal operation method, comprising:
receiving, by a terminal, at least one random access channel RACH configuration transmitted by a network-side device, wherein each of the at least one RACH configuration comprises at least one target resource, and the target resource comprises at least one of a physical random access channel transmission occasion RO resource and a physical uplink shared channel occasion PO resource; and
performing, by the terminal, a first operation based on the at least one RACH configuration, wherein the first operation comprises at least one of the following:
determining validity of the target resource; and
determining whether to transmit a random access message on the target resource.

2. The method according to claim 1, wherein the performing, by the terminal, a first operation based on the at least one RACH configuration comprises:
performing, by the terminal, the first operation based on a first configuration and the at least one RACH configuration, wherein
the first configuration comprises either of the following:
a configuration of a flexible duplex mode; and
a configuration of a flexible time division multiplexing TDD mode.

3. The method according to claim 2, wherein the target resource does not overlap a first resource;
or
the target resource overlaps a first resource, wherein
the first resource comprises at least one of a time domain resource and a frequency domain resource corresponding to the first configuration.

4. The method according to claim 3, wherein the first operation comprises:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

5. The method according to claim 4, wherein the determining, based on a TDD configuration and/or a frequency domain transmission format, whether the target resource is valid comprises:
determining that the target resource is valid in a case that at least one of the following conditions is met:
the target resource is on a time domain resource whose time domain transmission format is uplink UL;
the target resource is on a time domain resource whose time domain transmission format is flexible;
the target resource is on a frequency domain resource whose frequency domain transmission format is UL;
the target resource is on a frequency domain resource whose frequency domain transmission format is flexible; and
the target resource is on the time domain resource and/or the frequency domain resource of the first resource.

6. The method according to claim 4, wherein the determining, based on a TDD configuration and/or a frequency domain transmission format, whether the target resource is valid comprises:
determining that the target resource is invalid in a case that at least one of the following conditions is met:
the target resource overlaps a time domain resource whose time domain transmission format is downlink DL;
the target resource overlaps a time domain resource whose time domain transmission format is flexible;
the target resource overlaps a frequency domain resource whose frequency domain transmission format is DL;
the target resource overlaps a frequency domain resource whose frequency domain transmission format is flexible;
the target resource overlaps the time domain resource and/or the frequency domain resource of the first resource; and
the target resource overlaps a guard band of the first resource.

7. The method according to claim 1, wherein the determining whether to transmit a random access message on the target resource comprises:
determining, based on at least one of a time domain transmission format and a frequency domain transmission format, whether to transmit the random access message on a second resource in the target resource, wherein the second resource comprises at least one of a physical random access channel PRACH resource and a physical uplink shared channel PUSCH resource.

8. The method according to claim 7, wherein the random access message is transmitted on the second resource meeting at least one of the following conditions:
the second resource is on a time domain resource whose time domain transmission format is UL;
the second resource is on a time domain resource whose time domain transmission format is flexible;
the second resource is on a frequency domain resource whose frequency domain transmission format is UL;
the second resource is on a frequency domain resource whose frequency domain transmission format is flexible; and
the second resource is on a time domain resource and/or a frequency domain resource of a first resource.

9. The method according to claim 7, wherein the random access message is not transmitted on the second resource meeting at least one of the following conditions:
the second resource overlaps a time domain resource whose time domain transmission format is downlink DL;
the second resource overlaps a time domain resource whose time domain transmission format is flexible;
the second resource overlaps a frequency domain resource whose frequency domain transmission format is DL;
the second resource overlaps a frequency domain resource whose frequency domain transmission format is flexible;
the second resource overlaps a time domain resource and/or a frequency domain resource of a first resource; and
the second resource overlaps a guard band of the first resource.

10. The method according to claim 1, wherein the at least one RACH configuration meets any one of the following conditions:
the at least one RACH configuration is configured on an initial bandwidth part BWP;
the at least one RACH configuration is configured on an active BWP; and
the at least one RACH configuration is configured on an initial BWP and an active BWP respectively.

11. The method according to claim 10, wherein in a case that the active BWP comprises the initial BWP, the at least one RACH configuration is configured on the initial BWP.

12. The method according to claim 1, wherein the at least one RACH configuration meets any one of the following conditions:
in a case that the at least one RACH configuration is one RACH configuration, preamble resources corresponding to each RO comprised in the RACH configuration comprise a first preamble set and a second preamble set; or
in a case that the at least one RACH configuration is a plurality of RACH configurations, ROs corresponding to different RACH configurations in the plurality of RACH configurations are respectively associated with different synchronization signal blocks SSBs.

13. The method according to claim 12, wherein the first preamble set and the second preamble set are respectively associated with different SSBs.

14. The method according to claim 1, wherein in a case that the at least one RACH configuration is a plurality of RACH configurations, the plurality of RACH configurations comprise a first RACH configuration for a first type of terminal and a second RACH configuration for a second type of terminal.

15. The method according to claim 14, wherein the performing, by the terminal, a first operation based on the at least one RACH configuration further comprises:
determining, by the terminal based on network signal quality, whether to use the first RACH configuration or the second RACH configuration.

16. The method according to claim 1, wherein in a case that the at least one RACH configuration comprises a plurality of RACH configurations, different RACH configurations correspond to different reference signal received power RSRP thresholds or priorities.

17. The method according to claim 1, wherein the performing, by the terminal, a first operation based on the at least one RACH configuration further comprises:
selecting, by the terminal, a target resource from the at least one target resource based on network indication information, an RSRP threshold corresponding to the RACH configuration, or a priority corresponding to the RACH configuration.

18. The method according to claim 1, wherein the at least one RACH configuration is a contention-based two-step RACH configuration; or the at least one RACH configuration is a contention-based four-step RACH configuration.

19. The method according to claim 1, wherein the at least one RACH configuration is transmitted by using at least one of the following:
broadcast signaling; and
radio resource control RRC signaling.

20. A terminal operation method, comprising:
transmitting, by a network-side device, at least one random access channel RACH configuration to a terminal, wherein
each of the at least one RACH configuration comprises at least one target resource, the target resource comprises at least one of a physical random access channel transmission occasion RO resource and a physical uplink shared channel occasion PO resource, and the at least one RACH configuration is used by the terminal to perform a first operation, wherein
the first operation comprises at least one of the following:
determining validity of the target resource; and
determining whether to transmit a random access message on the target resource.

21. The method according to claim 20, wherein the at least one RACH configuration is used by the terminal to perform the first operation based on a first configuration and the at least one RACH configuration, wherein
the first configuration comprises either of the following:
a configuration of a flexible duplex mode; and
a configuration of a flexible time division multiplexing TDD mode.

22. The method according to claim 21, wherein the target resource does not overlap a first resource;
or
the target resource overlaps a first resource, wherein
the first resource comprises at least one of a time domain resource and a frequency domain resource corresponding to the first configuration.

23. The method according to claim 22, wherein the first operation comprises:
in a case that the target resource overlaps the first resource, determining at least one of the following:
the target resource overlapping the first resource is invalid;
based on a time division multiplexing TDD configuration and/or a frequency domain transmission format, whether the target resource is valid; and
the first resource overlapping the target resource is invalid.

24. A terminal operation apparatus, comprising:
a receiving module, configured to receive at least one random access channel RACH configuration transmitted by a network-side device, wherein each of the at least one RACH configuration comprises at least one target resource, and the target resource comprises at least one of a physical random access channel transmission occasion RO resource and a physical uplink shared channel occasion PO resource; and
an execution module, configured to perform a first operation based on the at least one RACH configuration, wherein the first operation comprises at least one of the following:
determining validity of the target resource; and
determining whether to transmit a random access message on the target resource.

25. A terminal operation apparatus, comprising:
a transmitting module, configured to transmit at least one random access channel RACH configuration to a terminal, wherein
each of the at least one RACH configuration comprises at least one target resource, the target resource comprises at least one of a physical random access channel transmission occasion RO resource and a physical uplink shared channel occasion PO resource, and the at least one RACH configuration is used by the terminal to perform a first operation, wherein
the first operation comprises at least one of the following:
determining validity of the target resource; and
determining whether to transmit a random access message on the target resource.

26. A terminal, comprising a processor and a memory, wherein the memory stores a program or instructions capable of running on the processor, and when the program or instructions are executed by the processor, the steps of the terminal operation method according to any one of claims 1 to 19 are implemented.

27. A network-side device, comprising a processor and a memory, wherein the memory stores a program or instructions capable of running on the processor, and when the program or instructions are executed by the processor, the steps of the terminal operation method according to any one of claims 20 to 23 are implemented.

28. A readable storage medium, wherein the readable storage medium stores a program or instructions, and when the program or instructions are executed by a processor, the steps of the terminal operation method according to any one of claims 1 to 19 are implemented, or the steps of the terminal operation method according to any one of claims 20 to 23 are implemented.
